# FASCICULE DE BREVET EUROPEEN

(11) **EP 1 528 230 B1**
(45) Date de publication et mention de la délivrance du brevet: **11.03.2009**
(21) Numéro de dépôt: 04300696.4
(22) Date de dépôt: 20.10.2004
(51) Int. Cl.: F01N 3/037, F01N 3/01

(54) **Dispositif et procédé de filtrage de particules contenues dans des gaz d'échappement**
Vorrichtung und Verfahren zur Filtrierung von Abgaspartikeln
Apparatus and process for filtration of particles contained in exhaust gas

(30) Priorité: 29.10.2003 FR 0312635
(43) Date de publication de la demande: 04.05.2005
(73) Titulaire: RENAULT S.A.S., 92100 Boulogne Billancourt (FR)
(72) Inventeur: Boichot, Raphael, 73370, Le Bourget du Lac (FR); Eymerie, Stéphane, 27120 Pacy sur Eure (FR); Bernis, Alain, 73230 Saint Alban Leysse (FR)

(56) Documents cités:
- EP-A- 1 051 234
- DE-A- 3 314 170
- DE-A- 3 324 886
- DE-A- 3 500 375
- US-A- 4 406 119
- US-A- 5 458 850
- US-A- 5 557 923
- US-A- 5 695 549

## Description

L'invention concerne le domaine des dispositifs de filtrage des gaz d'échappement.

L'invention concerne plus particulièrement un dispositif de filtrage électrostatique de particules contenues dans des gaz d'échappement, notamment pour un moteur à combustion de véhicule automobile. L'invention, a également pour objet un ensemble de filtrage et un procédé de filtrage des particules de gaz d'échappement.

On connaît, par la demande de brevet WO 00/02549, un ensemble de filtrage de gaz chargés de particules comprenant un filtre électrostatique à effet couronne ou décharge couronne, comprenant une cage cylindrique à l'intérieur de laquelle pénètrent les gaz d'échappement en vue de leur filtrage. Un tel dispositif possède l'inconvénient que les particules sont principalement chargées négativement par émission d'électrons et attachement des électrons émis avec les particules. Compte tenu de la faible concentration en particules des gaz d'échappement, la probabilité d'attachement des particules avec un électron émis reste faible. Il est alors nécessaire d'alimenter l'électrode centrale avec un niveau d'énergie important pour provoquer une émission d'électrons importante. De plus, les particules doivent parcourir tout l'espace intér-électrode sous le seul effet du champ électrique avant de pouvoir se fixer sur un substrat métallique. Compte tenu de la faible mobilité électrique des particules chargées, la probabilité de fixation des particules sur le substrat est faible.

On connaît par le brevet US 4 478 613 un ensemble de filtrage de particules contenues dans des gaz d'échappement comprenant un filtre électrostatique et un séparateur mécanique de particules. Le filtre électrostatique comprend un élément tubulaire ayant une de ses extrémités fermées, à l'intérieur duquel se trouve un empilement de disques concentriques par rapport à l'axe du tube. Le tube est maintenu un potentiel nul alors que les disques sont reliés à un potentiel négatif. Les gaz d'échappement pénètrent dans le tube par une ouverture et circulent axialement pour ressortir par une ouverture opposée située sur le côté. Les disques portés à un potentiel négatif constituent une structure émissive permettant de générer un champ électrique entre la surface intérieure du tube et les disques. Les gaz d'échappement traversent ce champ, les particules contenues dans les gaz d'échappement étant chargées électriquement. Les particules ainsi chargées se déplacent radialement sous l'effet du champ électrique créé pour aller se déposer sur la face interne du tube où elles s'amassent par couche, puis se détachent de l'intérieur du tube, et enfin sont amenées jusqu'à un séparateur centrifuge.

Un tel dispositif possède l'inconvénient que les particules sont principalement chargées négativement par émission d'électrons et attachement, des électrons émis avec les particules circulant dans un flux de gaz. Compte tenu de la faible concentration en particules des gaz d'échappement, la probabilité d'attachement des particules avec un électron émis reste faible. Il est nécessaire d'alimenter l'électrode centrale avec un niveau d'énergie important pour provoquer une émission d'électrons importante. De plus, pour être amassées, les particules chargées doivent migrer radialement vers l'intérieur du tube. Cependant ces particules chargées se déplacent axialement en étant entraînées par les gaz d'échappement. II est donc nécessaire de fournir une énergie d'alimentation de la tige centrale assurant une migration radiale rapide sous l'effet du champ électrique crée entre les électrodes. De plus, le détachement des particules amassées sur la paroi intérieure du tube nécessite un dispositif particulier.

Le document US4406119 décrit un dispositif de filtrage et d'agglomération de particules contenues dans des gaz d'échappement d'un moteur à combustion de véhicule automobile. Ce dispositif comprend au moins un moyen de filtrage électrostatique associé à au moins un moyen de récupération et à au moins un moyen d'élimination des amas de particules, montés en aval du moyen de filtrage électrostatique. Cependant le moyen de filtrage électrostatique est défini par un premier ensemble qui charge électriquement les particules et par un deuxième ensemble, séparé du premier, dans lequel les particules chargées s'agglomèrent pour ensuite être envoyées vers le un moyen de récupération.

La demanderesse a mis au point un système de filtration électrostatique, ce qui a fait l'objet du document FR2 839 903 publiée le 28.11.2003. Ce document décrit un dispositif de filtrage comprenant passage pour les gaz d'échappement, une électrode externe entourant le passage, formée par un agglomérat ou un enchevêtrement de fibres métalliques perméables aux gaz et aptes à retenir mécaniquement des particules. Une électrode interne, du type filaire, est disposée selon l'axe du passage et des moyens d'alimentation électrique des électrodes permettent d'établir un champ électrique avec formation de décharges couronnes pour un filtrage électrostatique des particules.

Le dispositif de filtrage des fibres dans ce document permet simultanément un filtrage mécanique et un filtrage de type électrostatique. En effet, les particules traversant le passage sont amenées à traverser l'électrode externe formée par un agglomérat ou un enchevêtrement des fibres métalliques aptes à piéger les particules, ce qui permet un filtrage mécanique assisté par lés interactions électrostatiques entre les particules et les fibres. Dans ce document , l'élimination des particules captées et stockées par l'électrode externe se fait par chauffage des électrodes.

Toutefois, avec un tel dispositif de filtrage, les électrodes sont chauffées par intermittence. L'agglomération des particules sur la surface active de l'électrode entraîne une baisse de l'efficacité de filtration globale et restreint le stockage de nouvelles particules jusqu'au prochain chauffage des électrodes assurant leur régénération.

La présente invention a donc pour objet de résoudre cette difficulté et de prévoir un dispositif de filtrage de particules qui permette une bonne efficacité de filtration des particules de façon continue et nécessitant un apport d'énergie faible. A cet effet, le dispositif de filtrage et d'agglomération selon l'invention destiné à la filtration de particules contenues dans des gaz d'échappement d'un moteur à combustion de véhicule automobile comprend au moins un moyen de filtrage électrostatique permettant d'agglomérer les particules de gaz, associé à au moins un moyen de récupération et à au moins un moyen d'élimination des amas de particules montés en aval du moyen de filtrage électrostatique. Le moyen de filtrage électrostatique comprend une électrode interne, une électrode externe en matière poreuse capable de laisser passer les gaz d'échappement ainsi que des amas de particules agglomérés par effet électrostatique lors du passage du gaz d'échappement à travers la matière poreuse. L'électrode interne est du type filaire, l'électrode externe est formée par un enchevêtrement de fibres métalliques. L'électrode externe est reliée à une masse électrique, l'électrode interne est portée à un potentiel positif ou à un potentiel négatif pour établir un champ électrique avec formation de décharges couronnes. L'électrode externe peut comprendre des pièces conductrices de renfort et de continuité électrique noyées dans l'agglomération de fibres métalliques. Les pièces conductrices sont métalliques et possèdent une certaine rigidité, permettant de renforcer l'électrode externe et d'assurer une continuité électrique. Les particules contenues dans les gaz d'échappement sont amenées à traverser l'électrode externe de forme cylindrique comprenant un agglomérat ou un enchevêtrement de fibres métalliques apte à agglomérer les particules. Les particules des gaz d'échappement ainsi traitées sont agglomérées lors du passage du gaz d'échappement à travers la matrice poreuse sous forme d'amas de particules ayant une taille suffisante pour être récupérés avec des moyens de post-traitement conventionnellement utilisés. Dans un mode de réalisation, le moyen de récupération des amas de particules comprend un collecteur centrifuge mécanique. Le collecteur peut par exemple comprendre un cyclone ou un collecteur à hélice. Avantageusement, les moyens de récupération comportent un bac collecteur des particules contenues dans les gaz d'échappement.

Dans un mode de réalisation, le moyen de récupération des amas de particules comprend un collecteur électrostatique. Le collecteur peut par exemple comprendre un séparateur électrique de type fil-plaque, fil cylindre ou plaque-plaque.

Avantageusement, le moyen d'élimination des amas de particules comprend un moyen de combustion. Le dépôt des particules contenues dans les gaz d'échappement est stocké dans un bac collecteur ou contre une paroi, puis lorsqu'on a retenu suffisamment de suies, le dépôt est détruit par combustion.

Dans un mode de réalisation, le moyen de combustion est activé électriquement. L'activation peut se faire à l'aide d'un système de circulation d'un courant électrique pour provoquer un échauffement et une combustion du dépôt, comme dans un dispositif du type cordon chauffant. Dans le cas d'un collecteur électrostatique, des éléments en saillie, par exemple des pointes conductrices d'électricité peuvent avantageusement être montées sur la face opposée à celle ou le dépôt de suie s'effectue afin de créer un arc électrique ponctuel. Un arc électrique ainsi généré par une surtension de l'électrofiltre permet l'échauffement local de la surface sur laquelle se trouvent les particules déposées. La combustion des particules de suie étant fortement exothermique, cet échauffement localise suffit pour initier la combustion de l'ensemble du dépôt de particule.

Dans un mode de réalisation, le moyen de combustion est activé par carburant. Avantageusement une très faible quantité de carburant est injectée avec un moyen approprié au-dessus de sa température d'autoinflammation pour initier la combustion du dépôt.

Le moyen de combustion petit avantageusement être activé par injection d'hydrogène H₂ ou d'ozone O₃.

Dans un mode de réalisation, le moyen de combustion comprend une conduite de recirculation des gaz d'échappement chargés de particules provenant du dispositif de filtrage, relié à la chambre de combustion du moteur.

L'invention concerne également un ensemble de filtrage des particules de gaz d'échappement pour véhicule automobile, comprenant une pluralité de dispositifs de filtrage et d'agglomération de particules montés en parallèle comprenant un moyen de filtrage électrostatique comprenant uns électrode interne, une électrode externe en matière poreuse, alimentées en courant électrique, capable de laisser passer les gaz d'échappement ainsi que des amas de particules agglomérés par effet électrostatique lors du passage du gaz d'échappement à travers la matière poreuse, les différents amas de particules générés par les dispositifs de filtrage sont regroupés au sein d'une même conduite d'amenée à un moyen commun de récupération, et à un moyen commun d'élimination.

L'invention concerne encore un procédé de filtrage des particules de gaz d'échappement d'un véhicule automobile, dans lequel on agglomère mécaniquement, et de façon électrostatique les particules par passage à travers une électrode poreuse, on récupère les particules à l'aide d'un collecteur, et on détruit les particules récupérées par combustion.

La présente invention et ses avantages seront mieux compris à l'étude de la description détaillée de modes de réalisation pris à titre d'exemples nullement limitatifs et illustrés par les dessins annexés, sur lesquels :
- la figure 1 est une vue en coupe d'un dispositif de filtrage des particule selon un premier mode de réalisation de l'invention ;
- la figure 2 est une vue en coupe d'un dispositif de filtrage des particules selon un deuxième mode de réalisation de l'invention;
- la figure 3 est une vue en coupe d'un dispositif de filtrage des particules selon un troisième mode de réalisation de l'invention; et
- la figure 4 est une vue d'un ensemble de filtrage comprenant des dispositifs de filtrage électrostatique montés en parallèle.

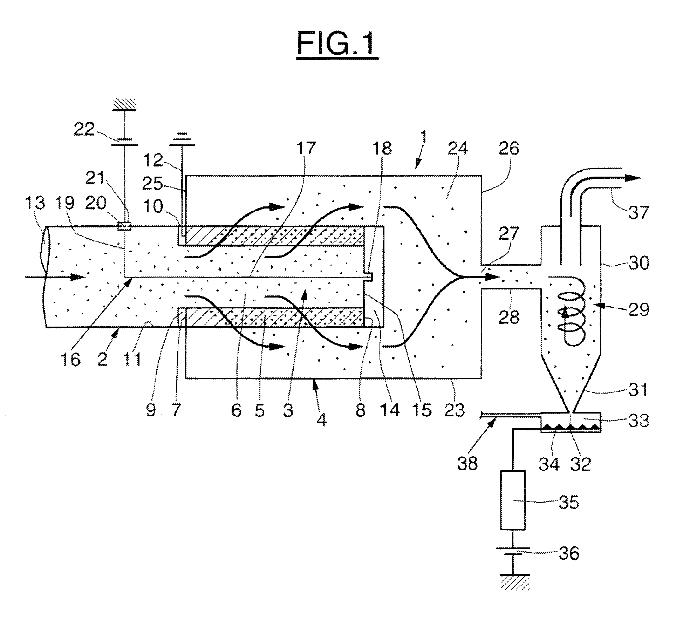

Sur la figure 1, une cellule de filtrage électrostatique, référencée 1 dans son ensemble, comprend une conduite d'admission 2, un collecteur 4, et une unité de filtrage 3 entre la conduite d'admission 2 et le collecteur 4.

L'unité de filtrage 3 comprend une électrode externe 5 de forme générale cylindrique. L'électrode 5 forme un passage axial 6 qu'elle entoure. L'électrode externe 5 comprend des surfaces frontales radiales référencées 7 et 8. La face frontale 7 vient en contact axial avec une couronne 9 de fixation de l'électrode externe 5 sur la conduite d'admission 2. La couronne de fixation 9 comprend une surface externe 10 en contact avec un alésage 11 de la conduite d'admission 2. La couronne. 9 est traversée par un conducteur 12 sortant radialement de la couronne 9 et relié à l'électrode externe 5. Le conducteur 12 relie électriquement l'électrode externe 5 à une masse de potentiel nul.

L'électrode externe 5 est ouverte du côté de sa surface frontale 7, de sorte que le passage central 6 communique avec la conduite d'admission 2. La conduite d'admission 2 comprend un orifice d'entrée 13 du côté opposé à l'électrode externe 5. Un disque 14 vient en appui axial par une surface radiale 15 contre la surface frontale 8 de l'électrode externe 5 opposée à la conduite d'admission 2. Le disque 14 ferme axialement le passage central 7 du côté opposé à la conduite d'admission 2.

L'unité de filtrage 3 comprend également une électrode centrale 16 sous la forme d'une tige 17 coaxiale à l'électrode externe 5 et dont une extrémité 18 est enfichée dans une portion isolante du disque 14. L'électrode interne 16 s'étend axialement depuis son extrémité 18 au-delà de la couronne de fixation 9 en étant coudée pour former une portion radiale 19 sortant radialement de la conduite d'admission 2 par une ouverture 20 formée dans une paroi de la conduite d'admission 2. Un isolateur 21 est disposé dans l'ouverture 20 pour isoler électriquement la paroi de la conduite d'admission 2 de l'électrode interne 16. La portion radiale 19 est reliée électriquement à une source de tension 22.

Le collecteur 4 comprend une enveloppe cylindrique 23 entourant la portion de l'électrode externe 5 située en-dehors de la conduite d'admission 2. L'enveloppe cylindrique 23 s'étend axialement au-delà, du disque 14. L'enveloppe 23 comprend un diamètre intérieur supérieur au diamètre extérieur de l'électrode externe 5, de sorte qu'il existe un espace annulaire vide 24 entre l'enveloppe cylindrique 23 et l'électrode externe 5. Le collecteur 4 comprend une paroi radiale 25 reliant l'enveloppe 25 située du côté de la conduite d'admission 2 à l'extrémité de la conduite d'admission 2, de façon étanche. Le collecteur 4 est fermé du côté opposé à la conduite d'admission 2 par une paroi radiale 26 pourvue d'une ouverture centrale 27, dans laquelle débouche une conduite d'amenée 28 à un collecteur mécanique 29 de type cyclone. Le collecteur 29 comprend une portion cylindrique 30 prolongée en partie basse par une portion conique 31 comprenant, une ouverture 32, qui débouche dans un bac récupérateur 33. Le bac récupérateur comprend un dispositif du type cordon chauffant 34 relié à un dispositif de commande électrique 35 relié à une source de courant 36. Le collecteur 29 comprend une conduite d'évacuation 37 des gaz d'échappement traités opposée au bac récupérateur 33.

Les gaz d'échappement chargés de particules pénètrent dans la conduite d'admission 2 par l'orifice d'entrée 13. Les gaz d'échappement chargés de particules s'écoulent dans le passage central 6 de l'électrode externe 5, qui communique avec la conduite d'admission 2, dans lequel ils sont ionisés et les particules chargées électriquement. Le disque 14 empêche le passage axial des gaz d'échappement. Les gaz d'échappement sont déviés radialement et traversent l'électrode externe 5 qui est perméable aux gaz. A l'approche de l'électrode externe 5, les particules chargées, soumises à un fort champ, migrent spécifiquement vers ces aspérités sur de très courtes distances. Les gaz d'échappement passent dans l'espace annulaire 24, puis circulent dans le collecteur 4 jusqu'au collecteur mécanique 29 de type cyclone.

Les gaz d'échappement chargés de particules agglomérées arrivant par la conduite d'amenée 28 sont mis en rotation immédiatement, du fait de la courbure de la portion cylindrique 30, le vortex descendant créé transmet aux amas de particules solides une énergie cinétique qui tend à les plaquer contre la paroi interne de la portion du cylindre 30 et à les séparer des gaz d'échappement. Les gaz d'échappement épurés se dirigent vers un vortex ascendant tourbillon ascensionnel qui s'est formé à l'intérieur du cyclone jusqu'à la conduite d'évacuation des gaz 37. La portion conique 31 en partie basse du cyclone a pour effet de repousser progressivement vers le vortex ascendant les gaz d'échappement descendants et de les intégrer à celui-ci, en même temps qu'il canalise les particules agglomérées vers l'ouverture 32 du bac récupérateur 33. Les amas de particules, stockés dans le bac récupérateur 33 (représenté schématiquement par des triangles) sont brûlés par le dispositif du type cordon chauffant 34 disposé de préférence sur la paroi interne du fond du bac récupérateur 33, Le dispositif du type cordon chauffant 34 est relie à un système de commande électrique 35. Le système de commande électrique 35 est relié, électriquement à une source de courant 36 qui permet de générer un échauffement du dépôt d'amas de particules et de provoquer leur combustion. Le système de commande électrique 35, est monté de façon à se déclencher périodiquement en fonction par exemple des kilomètres parcourus, du temps de fonctionnement, ou encore par l'intermédiaire d'une sonde mesurant la quantités d'amas de particules stockés sur le cordon chauffant. On peut choisir un déclenchement tous les cinquante kilomètres. La conduite d'évacuation 37 des gaz d'échappement traités peut être reliée à une sortie d'échappement directement, ou par l'intermédiaire de différents volumes de catalyseurs par exemple du type oxydation-réduction des oxydes d'azote. Le bac récupérateur 33 comprend une conduite 38 de recirculation des gaz d'échappement reliée à la chambre à combustion du moteur. Cette conduite de recirculation 38 transporte le résidu de filtration sous forme de gaz concentré en particules dans la chambre à combustion du moteur, où les particules seront ainsi brûlées. A cet effet, la conduite de recirculation 38 rejoint une conduite d'admission en air de la chambre de combustion. Une vanne EGR (non représentée) permet de réguler le débit de gaz d'échappement en direction de la chambre à combustion, ainsi une quantité plus ou moins importants de d'amas de particules peut être détruite. La stratégie EGR est la suivante : pour les faibles débits moteurs, les amas de particules rejetés sont gros et sédimentent facilement, le stockage par combustion sur support, avec un dispositif du type cordon chauffant 34 est donc préférable. Pour les forts débits moteurs, où les amas de particules sont petits et difficiles à retenir, et où le débit d'admission à l'EGR est maximum, un pompage du gaz concentré en particules est préférable, avec la conduite de recirculation 38. Dans le cas où une stratégie de recirculation des gaz d'échappement n'est pas envisagée, le dispositif de filtrage peut ne pas comprendre de conduite de recirculation 38.

L'électrode externe 5 est maintenue à un potentiel nul, l'électrode interne 16 étant portée à un potentiel positif ou négatif. La différence de potentiel créée entre l'électrode externe 5 et interne 16 induit la présence d'un champ électrique dans le passage axial 6. Si ce champ électrique possède une intensité suffisante, en particulier au très proche voisinage de l'électrode interne 16, il se produit une ionisation partielle ou totale des gaz, ou milieu, compris entre les électrodes interne 16 et externe 5

Dans le cas d'une électrode interne 18 portée à un potentiel négatif, les particules présentes dans les gaz d'échappement se chargent principalement par collision et combinaison avec des électrons libres. Compte tenu de la faible concentration de particules dans les gaz d'échappement, la probabilité qu'un électron se déplaçant rapidement de l'électrode interne 16 vers l'électrode externe 5 heurte une particule et se combine avec cette dernière est faible. Afin de charger les particules de façon convenable en vue de leur filtrage électrostatique, il est nécessaire de provoquer une avalanche électronique suffisante. L'électrode interne 16 doit donc être portée à un potentiel élevé, par exemple compris entre 50 et 150 kV. L'augmentation du potentiel auquel est portée l'électrode interne 16 a également pour effet l'ionisation d'un milieu gazeux dans un volume plus étendu. Cependant, l'ionisation de tout le volume compris entre les électrodes interne 18 et externe 5 nécessite une énergie considérable.

Dans le cas d'une électrode interne 18 portée à un potentiel positif, les particules présentes dans les gaz d'échappement traversent un milieu ionisé. II existe une plus grande probabilité, dans ce cas, qu'une particule rencontre une molécule ionisée ou un électron libre et se combine pour former une particule chargée positivement ou négativement. Une électrode interne 16 positive permet une ionisation du volume compris entre l'électrode interne 16 et l'électrode externe 5 avec une énergie apportée faible, en étant portée à un potentiel positif moindre, par exemple compris entre 1 kV et 50 kV.

Le champ électrique quasiment homogène dans l'espace inter électrodes dévie les particules chargées qui migrent vers l'électrode poreuse. Le champ électrique est hétérogène uniquement à proximité des deux électrodes. Lorsque les particules se trouvent à proximité de l'électrode poreuse, de l'ordre de 1 mm, les lignes de champ électriques convergent vers les fibres de l'électrode poreuse. Les particules sont alors précipitées contre les fibres par les fortes augmentations locales de champ électrique. Etant donné que le champ électrique est nul à l'intérieur de l'électrode poreuse et que sa surface développée est faible, la majorité des particules atteint l'électrode dès la première rangée de fibres et quasiment aucune captation en profondeur ne s'effectue. Les particules chargées et déposées sur la face interne de l'électrode s'agglomèrent par interactions électrostatiques et par forces de Van der Waals. Les amas de particules grossissent alors jusqu'à atteindre une taille suffisante pour que les forces de frottement exercées par les gaz d'échappement les arrachent. Les amas de particules grossissent jusqu'à leur éjection hors de l'électrode poreuse sous la forme d'agglomérats.

A titre d'exemple, le rapport de taille, entre les particules des gaz d'échappement émises par le moteur, environ 100 nm, et les amas de particules ainsi récupérés, est de 100 à 1000. La majorité des particules agglomérées a alors une taille supérieure à 5 µm.

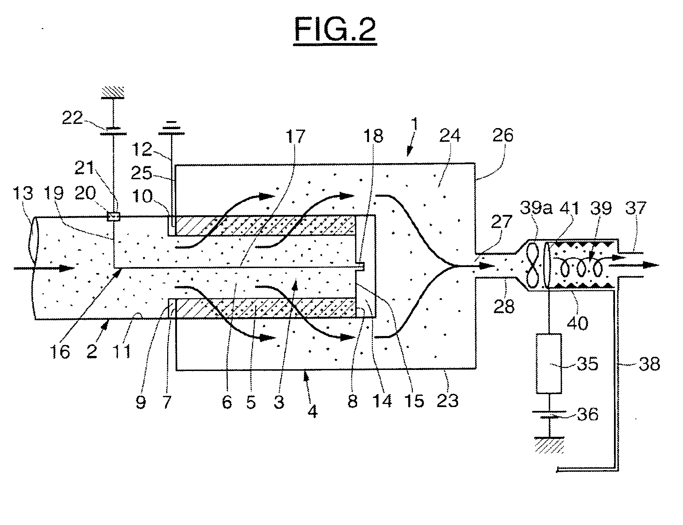

Dans la variante illustrée sur la figure 2, sur laquelle les éléments identiques portent les mêmes références, le dispositif de filtrage comprend à la place du collecteur 29 de type cyclone un collecteur à hélice 39 comprenant une hélice 39a, une paroi cylindrique 40, et un cordon chauffant 41 disposé sur le pourtour intérieur de la paroi cylindrique 40 du collecteur à hélice. L'hélice 39a crée un vortex à l'intérieur du collecteur 39. Le vortex met en rotation le flux gazeux qui a tendance à assurer un effet de centrifugation des particules et à les plaquer contre la paroi cylindrique 40 du collecteur, on obtient alors un dépôt d'amas de particules. Les amas de particules stockés (représentés schématiquement par des triangles), sont ensuite brûles par l'intermédiaire du cordon chauffant 41. La conduite d'évacuation 37 évacue les gaz d'échappement ainsi traités. Le dispositif de filtrage comprend d'une manière analogue au mode de réalisation précédent, une conduite de recirculation 38 des gaz d'échappement pouvant être enlevée ou pas selon la stratégie retenue pour l'élimination du dépôt des particules.

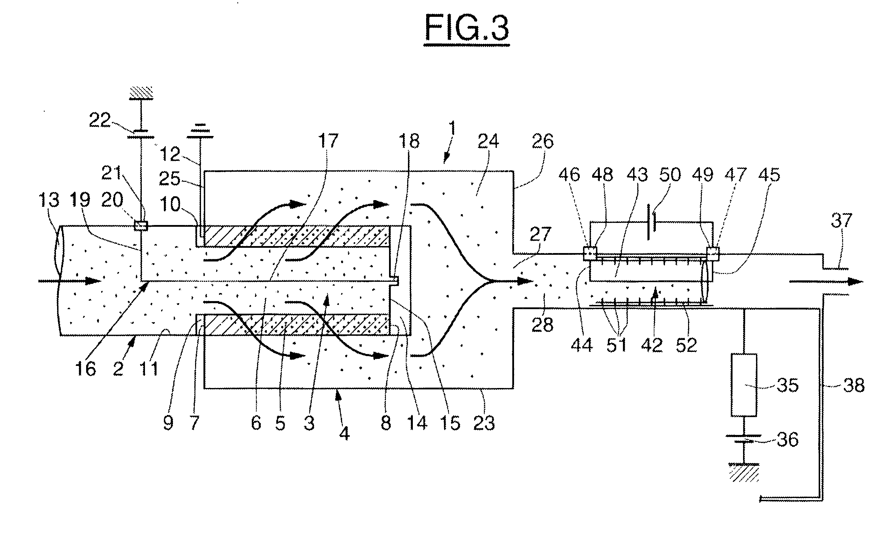

Dans la variante illustrée sur la figure 3, sur laquelle les éléments identiques aux figures 1 et 2 portent les mêmes références, le dispositif de filtrage comprend un séparateur électrique 42 comprenant une électrode 43 pouvant être de type filaire. L' électrode 43 s'étend axialement en étant coudé à chacune de ses extrémités pour former deux portions radiales 44 et 45 sortant du séparateur électrique 42 par deux ouvertures 46 et 47. Deux isolateurs 48 et 49 sont disposés dans les ouvertures 46 et 47 pour isoler électriquement la paroi du séparateur électrique 42 de l'électrode 43. Les portions radiales 44 et 45 sont reliées électriquement à une source de tension 50. Avantageusement, la source de tension 22 de la cellule de filtrage 1 peut être utilisée. Le séparateur électrique 42 comprend un cordon chauffant 52 et des disques ajourés 51, s'étendant radialement et disposés de manière espacée. Les gaz d'échappement chargés de particules agglomérées sont déviés radialement par le champ créé à l'intérieur du séparateur électrique 42. Les particules agglomérées ainsi chargées sont arrêtées par les disques ajourés 51. Les particules agglomérées sont alors brûlées à l'aide du cordon chauffant 52.

D'une manière différente des modes de réalisations précédents, il est également possible de profiter du caractère exothermique des amas de particules pour réaliser leur combustion avec un moyen approprié injectant au niveau de la zone de dépôt des particules une faible quantité de carburant au-dessus de sa température d'auto-inflammation pour permettre la combustion du dépôt de particules.

D'une manière analogue, une injection d'un composé oxydant très puissant, par exemple l'ozone 03 , petit assurer l'oxydation du dépôt de particules. Il est également possible en injectant de l'hydrogène H2, qui par réaction avec l'oxygène 02 dans certaines conditions thermodynamiques permet une augmentation globale de la température des gaz, de réaliser la combustion du dépôt.

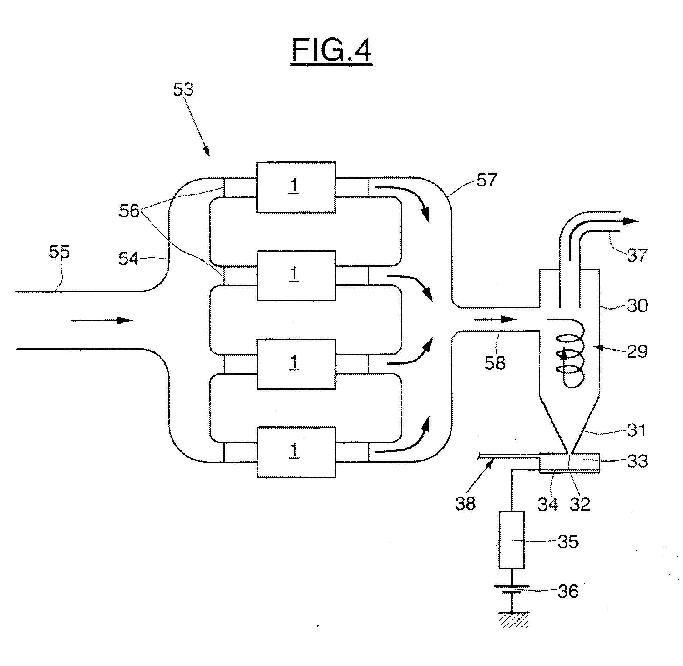

Sur la figure 4, un ensemble de filtrage des particules 53 comprend une entrée commune 55 qui véhicule les gaz d'échappement chargés en particules, les éléments identiques aux figures précédentes portant les mêmes références. Le distributeur 54 présente une pluralité de sorties 56, ici au nombre de quatre et permet ainsi de le débit de manière à avoir une meilleure efficacité des dispositifs de filtrage. Chaque sortie 56 est reliée à l'entrée d'un dispositif de filtrage 1 tel que décrit précédemment. Un collecteur général 57 est relié aux sorties des dispositifs de filtrage électrostatiques 1. L'ensemble des dispositifs de filtrage électrostatiques 1 peut se trouver dans un même volume, deux plaques percées d'orifices permettant de servir de distributeur et de collecteur des gaz d'échappement. (Les particules contenues dans les gaz d'échappement en amont des dispositifs de filtrage 1 ainsi que les amas de particules générés en aval des dispositifs de filtrage 1 n'ont pas été représentés). Ce collecteur général 57 comprend une conduite d'amenée 58 à un collecteur mécanique 29 de type cyclone tel que décrit précédemment, commun à l'ensemble des dispositifs de filtrage. Le cyclone 29 est associe à un dispositif d'élimination des amas de particules du type cordon chauffant 34 et à une conduite d'évacuation des gaz 37. Bien entendu, l'ensemble de filtrage 53 peut être relié aux autres moyens de récupération et d'élimination cités précédemment. Le dispositif comprend d'une manière analogue aux modes de réalisations précédents, une conduite de recirculation 38 des gaz d'échappement pouvant être enlevée ou pas selon la stratégie, retenue pour l'élimination du dépôt des particules.

## Revendications

1. Dispositif de filtrage et d'agglomération de particules contenues dans des gaz d'échappement d'un moteur à combustion de véhicule automobile, comprenant au moins un moyen de filtrage électrostatique (1) comprenant une électrode interne (17), une électrode externe (5), alimentées en courant électrique, ledit moyen de filtrage (1) étant associé à au moins un moyen de récupération (29) et à au moins un moyen d'élimination (34) des amas de particules, montés en aval du moyen de filtrage électrostatique (1), **caractérisé en ce que** l'électrode externe (5) est en matière poreuse capable de laisser passer les gaz d'échappement ainsi que des amas de particules agglomérés par effet électrostatique lors du passage du gaz d'échappement à travers la matière poreuse.

2. Dispositif selon la revendication 1, **caractérisé en ce que** le moyen de récupération des amas de particules comprend un collecteur centrifuge mécanique (29, 39).

3. Dispositif selon la revendication 1, **caractérisé en ce que** le moyen de récupération des amas de particules comprend un collecteur électrostatique (42).

4. Dispositif selon la revendication 1, **caractérisé en ce que** le moyen d'élimination des amas de particules comprend un moyen de combustion.

5. Dispositif selon la revendication 4, **caractérisé en ce que** le moyen de combustion est activé électriquement (34, 38).

6. Dispositif selon la revendication 4, **caractérisé en ce que** le moyen de combustion est activé par carburant.

7. Dispositif selon la revendication 4, **caractérisé en ce que** le moyen de combustion est activé par injection d'hydrogène H2 ou d'ozone O3.

8. Dispositif selon la revendication 4, **caractérisé en ce que** le moyen de combustion comprend une conduite de recirculation (38) des gaz d'échappement chargés de particules provenant du dispositif de filtrage, relié à la chambre de combustion du moteur.

9. Dispositif selon l'une quelconque des revendications précédentes, et **caractérisé en ce qu'**il comprend plusieurs moyens de filtrage électrostatique (1), les moyens étant montés en parallèle, et associé au moyen commun de récupération (29) et au moyen commun d'élimination (34) des amas de particules.

10. Procédé de filtrage des particules de gaz d'échappement d'un véhicule automobile, dans lequel
• on agglomère mécaniquement et de façon électrostatique les particules par passage à travers une électrode poreuse;
• on récupère les particules à l'aide d'un collecteur; et
• on détruit les particules récupérées par combustion, par exemple dans un volume de stockage ou par recirculation vers la chambre de combustion d'un moteur du véhicule automobile.

## Claims

1. Device for filtering and agglomerating particulates contained in the exhaust gases of a motor vehicle internal combustion engine, comprising at least one electrostatic filter means (1) comprising an inner electrode (17), an outer electrode (5), supplied with electric power, the said filter means (1) being associated with at least one means (29) for recovering and at least one means (34) for removing clusters of particulates, mounted downstream of the electrostatic filter means (1), **characterized in that** the outer electrode (5) is made from a porous material capable of allowing the exhaust gases and also clusters of particulates agglomerated by electrostatic effect to pass through during the passage of the exhaust gas through the porous material.

2. Device according to Claim 1, **characterized in that** the means for recovering particulate clusters comprises a mechanical centrifugal collector (29, 39).

3. Device according to Claim 1, **characterized in that** the means for recovering particulate clusters comprises an electrostatic collector (42).

4. Device according to Claim 1, **characterized in that** the means for removing particulate clusters comprises combustion means.

5. Device according to Claim 4, **characterized in that** the combustion means is electrically activated (34, 38).

6. Device according to Claim 4, **characterized in that** the combustion means is activated by fuel.

7. Device according to Claim 4, **characterized in that** the combustion means is activated by injecting hydrogen H₂ or ozone O₃.

8. Device according to Claim 4, **characterized in that** the combustion means comprises a duct (38) for recirculating the exhaust gases laden with particulates issuing from the filtering device, connected to the combustion chamber of the engine.

9. Device according to any one of the preceding claims, and **characterized in that** it comprises a plurality of electrostatic filter means (1), the means being mounted in parallel, and associated with the common means (29) for recovering and with the common means (34) for removing the clusters of particulates.

10. Method for filtering particulates in a motor vehicle exhaust gas, in which
• the particulates are mechanically and electrostatically agglomerated by passage through a porous electrode;
• the particulates are recovered using a collector; and
• the recovered particles are destroyed by combustion, for example in a storage vessel or by recirculation to the combustion chamber of an engine of the motor vehicle.

## Patentansprüche

1. Vorrichtung zum Filtern und Anhäufen von Partikeln, die in Abgasen eines Kraftfahrzeugverbrennungsmotors enthalten sind, die mindestens ein elektrostatisches Filtermittel (1) aufweist, das eine interne Elektrode (17) und eine externe Elektrode (5) aufweist, die mit elektrischem Strom versorgt werden, wobei das Filtermittel (1) mit mindestens einem Rückgewinnungsmittel (29) und mindestens einem Eliminierungsmittel (34) der Partikelanhäufungen, die stromabwärts des elektrostatischen Filtermittels (1) installiert sind, verbunden ist, **dadurch gekennzeichnet, dass** die externe Elektrode (5) aus porösem Material besteht, das die Abgase sowie die Partikelanhäufungen, die sich durch elektrostatischen Effekt beim Durchgehen des Abgases durch das poröse Material angesammelt haben, durchlassen kann.

2. Vorrichtung nach Anspruch 1, **dadurch gekennzeichnet, dass** das Rückgewinnungsmittel der Partikelanhäufungen einen mechanischen Zentrifugalsammler (29, 39) aufweist.

3. Vorrichtung nach Anspruch 1, **dadurch gekennzeichnet, dass** das Rückgewinnungsmittel der Partikelanhäufungen einen elektrostatischen Sammler (42) aufweist.

4. Vorrichtung nach Anspruch 1, **dadurch gekennzeichnet, dass** das Eliminierungsmittel der Partikelanhäufungen ein Verbrennungsmittel aufweist.

5. Vorrichtung nach Anspruch 4, **dadurch gekennzeichnet, dass** das Verbrennungsmittel elektrisch aktiviert wird (34, 38).

6. Vorrichtung nach Anspruch 4, **dadurch gekennzeichnet, dass** das Verbrennungsmittel durch Kraftstoff aktiviert wird.

7. Vorrichtung nach Anspruch 4, **dadurch gekennzeichnet, dass** das Verbrennungsmittel durch Wasserstoffeinspritzung H₂ oder Ozoneinspritzung O₃ aktiviert wird.

8. Vorrichtung nach Anspruch 4, **dadurch gekennzeichnet, dass** das Verbrennungsmittel eine Rezirkulationsleitung (38) der Abgase, die mit Partikeln geladen sind, die von der Filtervorrichtung kommen, die mit der Brennkammer des Motors verbunden ist, aufweist.

9. Vorrichtung nach einem der vorhergehenden Ansprüche und **dadurch gekennzeichnet, dass** sie mehrere elektrostatische Filtermittel (1) aufweist, wobei die Mittel parallel installiert und mit dem gemeinsamen Rückgewinnungsmittel (29) und dem gemeinsamen Eliminierungsmittel (34) der Partikelanhäufungen verbunden sind.

10. Filterverfahren der Abgaspartikel eines Kraftfahrzeugs bei dem:
• man mechanisch und elektrostatisch die Partikel durch Durchgehen durch eine poröse Elektrode anhäuft;
• man die Partikel mit Hilfe eines Sammlers zurückgewinnt; und
• man die zurückgewonnenen Mittel durch Verbrennung vernichtet, zum Beispiel in einem Lagervolumen oder durch Rezirkulation zu der Brennkammer eines Kraftfahrzeugmotors.
